# EUROPÄISCHE PATENTANMELDUNG

(11) **EP 2 022 589 A1**
(43) Veröffentlichungstag der Anmeldung: **11.02.2009**
(21) Anmeldenummer: 07015264.0
(22) Anmeldetag: 03.08.2007
(51) Int. Cl.: B23K 1/002, B23K 3/04

(54) **Fügeverfahren für Metallbauteile und Vorrichtung zum Beloten eines Metallbauteils**

(71) Anmelder: IMK AUTOMOTIVE GMBH, 09111 Chemnitz (DE)
(72) Erfinder: Leidholdt, Wolfgang, Dr., 08294 Lößnitz (DE); Trepte, Jens, Dr., 09128 Chemnitz (DE); Michel, Roland, Dr., 09130 Chemnitz (DE)
(74) Vertreter: Steiniger, Carmen

(57) **Zusammenfassung**

Die vorliegende Erfindung betrifft ein Fügeverfahren für Metallbauteile, wobei in einem ersten Schritt die zu fügenden Metallbauteile belotet werden, und in einem zweiten Schritt die Metallbauteile an ihren Lötstellen aneinandergebracht, in einer gewünschten Endlage fixiert und durch Erwärmen verlötet werden, um eine Fügestelle zu erzeugen. Die Erfindung betrifft ferner eine Vorrichtung zum Beloten eines Metallbauteils zur Anwendung bei dem erfindungsgemäßen Verfahren. Es ist die Aufgabe der vorliegenden Erfindung, ein Fügeverfahren der oben genannten Gattung zur Verfügung zu stellen, welches zu einer qualitativ guten und dauerhaften Lötverbindung zwischen den zu fügenden Metallbauteilen führt. Es ist ferner eine Aufgabe der vorliegenden Erfindung eine Vorrichtung zum Beloten eines Metallbauteils zur Verfügung zu stellen, die zum Ausführen des erfindungsgemäßen Fügeverfahrens geeignet ist. Die Aufgabe wird verfahrenstechnisch dadurch gelöst, dass die Metallbauteile in dem ersten Schritt jeweils an einem ebenen Oberflächenbereich induktiv erwärmt werden, dem erwärmten Oberflächenbereich an einer Lötstelle Lot zugeführt wird, wobei die Temperatur an der Lötstelle so eingestellt wird, dass das Lot beim Aufbringen auf die Lötstelle schmilzt, und die Lötstelle nach dem Schmelzen des Lotes wenigstens auf Schmelztemperatur gehalten und parallel dazu mit Ultraschall beaufschlagt wird, so dass jeweils eine Lotspur auf den Metallbauteilen entsteht. Die Aufgabe wird ferner durch eine Vorrichtung zum Beloten eines Metallbauteils, mit einer Auflage für das Metallbauteil, einer Lotdrahtzuführung, einer Ultraschalleinheit mit einer über die Metallbauteil vorsehbaren Sonotrode, und einem Induktor zum Erwärmen einer Lötstelle auf dem Metallbauteil gelöst, wobei der Induktor in Form einer Leiterschleife ausgebildet ist, die um die Sonotrode herum angeordnet ist.

## Beschreibung

Die vorliegende Erfindung betrifft ein Fügeverfahren für Metallbauteile, wobei in einem ersten Schritt die zu fügenden Metallbauteile belotet werden, und in einem zweiten Schritt die Metallbauteile an ihren Lötstellen aneinandergebracht, in einer gewünschten Endlage fixiert und durch Erwärmen verlötet werden, um eine Fügestelle zu erzeugen. Die Erfindung betrifft ferner eine Vorrichtung zum Beloten eines Metallbauteils zur Anwendung in dem erfindungsgemäßen Verfahren.

Ein Verfahren der oben genannten Gattung ist aus der deutschen Offenlegungsschrift DE 101 15 835 A1 bekannt. Diese Druckschrift schlägt ein Fügeverfahren für die Anwendung im Fahrzeug- und Karosseriebau vor, bei welchem nach einem Vorbeloten der zu fügenden Einzelteile diese positioniert, fixiert und gespannt werden, woraufhin alle Teile zum Zwecke des Auf- und Verschmelzens des aufgebrachten Lotes gleichzeitig erwärmt werden und an den konstruktiv vorgesehenen Fügestellen gleichzeitig gefügt werden, und wobei gleichzeitig dazu alle gespannten Teile mit Ultraschall beaufschlagt werden.

Das bekannte Verfahren ist nur mit entsprechendem Aufwand realisierbar, da beim Verlöten der Teile alle Teile gleichzeitig erwärmt und mit Ultraschall beaufschlagt werden müssen. Die hierfür erforderlichen Vorrichtungen müssen somit gerade im Fahrzeug- und Karosseriebau entsprechend groß gestaltet werden und können sich daher auch nur jeweils für das Zusammenfügen bestimmter Bauteile eignen. Für unterschiedliche Bauteile sind somit unterschiedliche Fügevorrichtungen erforderlich.

Zudem ist bekannt, dass für das Ultraschalllöten ein definierter Abstand zwischen einer Ultraschalleinheit und den zu lötenden Bereichen eingestellt werden muss, um gleichbleibend gute Lötergebnisse zu erzielen. Werden, wie in der bekannten Druckschrift beschrieben, verschiedenartige vorbelotete und miteinander verspannte Teile mit Ultraschall beaufschlagt, werden die Fügeergebnisse sehr unterschiedlich sein bzw. es wird an verschiedenen Stellen keine dauerhafte Lötverbindung realisierbar sein.

Es ist daher die Aufgabe der vorliegenden Erfindung, ein Fügeverfahren der oben genannten Gattung zur Verfügung zu stellen, welches zu einer qualitativ guten und dauerhaften Lötverbindung zwischen den zu fügenden Metallbauteilen führt. Es ist ferner eine Aufgabe der vorliegenden Erfindung eine Vorrichtung zum Beloten eines Metallbauteils zur Verfügung zu stellen, die zum Ausführen des erfindungsgemäßen Fügeverfahrens geeignet ist.

Die Aufgabe wird durch ein Fügeverfahren der oben genannten Gattung gelöst, bei welchem die Metallbauteile in dem ersten Schritt jeweils an einem ebenen Oberflächenbereich induktiv erwärmt werden, dem erwärmten Oberflächenbereich an einer Lötstelle Lot zugeführt wird, wobei die Temperatur an der Lötstelle so eingestellt wird, dass das Lot beim Aufbringen auf die Lötstelle schmilzt, und die Lötstelle nach dem Schmelzen des Lotes wenigstens auf Schmelztemperatur gehalten und parallel dazu mit Ultraschall beaufschlagt wird, so dass die jeweils eine Lotspur auf den Metallbauteilen entsteht.

Mit Hilfe des erfindungsgemäßen Verfahrens wird bereits beim Aufbringen des Lotes eine stabile Verbindung zwischen dem jeweiligen Oberflächenbereiches eine Metallbauteils mit dem darauf aufgebrachten Lot hergestellt. Damit wird erreicht, dass die zu fügenden Metallbauteile bei ihrem Aufeinanderbringen schon durch Erwärmen des Lotes so miteinander verlötet werden können, dass eine stabile Fügestelle entsteht. Bei dem Verlöten verschmelzen die Lotspuren, die auf den zu fügenden Metallbauteilen aufgebracht wurden. Da die Lote vorzugsweise aus dem gleichen Material bestehen, ist die Verbindung schnell und einfach realisierbar.

Mit Hilfe des erfindungsgemäßen Verfahrens kann die Ultraschallbeaufschlagung während des Belotens sehr definiert erfolgen, da die verwendete Ultraschalleinheit bzw. die entsprechende Sonotrode definiert an die Lötstelle herangebracht werden kann, wodurch sich langzeitstabile Verbindungen zwischen Oberflächen der Metallbauteile und dem aufgebrachten Lot ergeben. Da die kritische Verbindung zwischen unterschiedlichen Materialien, nämlich dem jeweiligen Metallbauteil und dem Lot, schon während des Belotens erfolgt, können nach dem Verlöten qualitativ hochwertige Fügeergebnisse erzielt werden.

Indem schon beim Beloten das Lot mit Hilfe von Ultraschall auf die Metallbauteile aufgebracht wird, können eventuell vorhandene Oxidschichten auf der Grundwerkstoffoberfläche der Metallbauteile mittels Ultraschall zerstört werden. Somit ist beim Beloten kein Flussmittel erforderlich. Aufgrund der hohen Frequenz des Ultraschalls treten hohe Beschleunigungen im Lot auf, wodurch Kohäsion bzw. Adhäsion überwunden werden. Dabei entstehen kleine Vakuumbläschen, die sich vergrößern und gleich wieder implodieren, was als Kavitationseffekt in der Literatur beschrieben wird. Der Ultraschall, der über eine Sonotrode in das schmelzflüssige Lot eingeleitet wird, erzeugt eine periodische Kompression und Dehnung, wodurch die Moleküle zusammengedrückt und gedehnt werden. Durch die Implosion der Vakuumbläschen werden Schockwellen und kleine gerichtete Flüssigkeitsstrahlen ausgesendet. Diese wirken mit einer hohen Geschwindigkeit auf ihre nähere Umgebung ein. Die Kavitationsbläschen sind hauptsächlich an den Grenzflächen des flüssigen Lotes aktiv und sprengen Oxide oder Verunreinigungen von der Oberfläche der Metallbauteile ab, wodurch eine sehr gute Verbindung der Oberfläche der jeweiligen Metallbauteile und dem Lot erzielt werden kann.

In einer bevorzugten Ausführungsform der vorliegenden Erfindung werden die Metallbauteile zum Verlöten induktiv erwärmt. Durch das induktive Erwärmen kann das jeweilige Metallbauteil sehr schnell, sauber und ohne zusätzliche Wärmequelle erhitzt werden. Dadurch wird ein hoher Wirkungsgrad erreicht und die Umgebung ist keiner thermischen und atmosphärischen Belastung ausgesetzt. Zudem hat die induktive Erwärmung den Vorteil, dass sie sehr gut regelbar ist und auf partielle Zonen, wie die Lötstelle, begrenzt werden kann und somit reproduzierbare Aufheizvorgänge schafft, wodurch die Metallbauteile besonders gut verlötet werden können. Die induktive Erwärmung ist auch besonders für die Serienfertigung geeignet, da für diese Form der Erwärmung nur ein geringer Platzbedarf erforderlich ist.

Entsprechend einer Variante der Erfindung kann es von Vorteil sein, wenn die Metallbauteile beim Verlöten mit Ultraschall beaufschlagt werden. Durch die Ultraschalleinwirkung entstehen beim Verlöten an der Fügestelle hohe Drücke und Temperaturen, wodurch sich die auf die Metallbauteile aufgebrachten Lote besonders gut miteinander verbinden, um eine feste Fügestelle auszubilden.

Gemäß einer günstigen Weiterbildung der Erfindung wird das Lot als Lötdraht der Lötstelle allmählich zugeführt und das Erwärmen und die Ultraschallbeaufschlagung der Lötstelle erfolgt beim Beloten und/oder Verlöten im Wesentlichen punktuell. Indem das Beloten Stück für Stück erfolgt, können die Bedingungen beim Beloten an der jeweiligen Lötstelle besonders definiert und gleichmäßig eingestellt werden, um eine ideale Verbindung zwischen dem aufgebrachten Lot und dem jeweiligen Metallbauteil herzustellen.

In einem vorteilhaften Beispiel der Erfindung werden die Metallbauteile an den Lötstellen einander überlappend aufeinander angeordnet. Auf diese Weise kann ein Überlappstoß zwischen den zu fügenden Metallbauteilen hergestellt werden, wobei sich die Lotspuren auf den zu fügenden Metallbauteilen direkt gegenüber sind. Nach der Fixierung der Bauteile in einer gewünschten Endlage kann bei einem solchen Überlappstoß auf einfache Weise das Verlöten durch Erwärmen, beispielsweise durch induktive Erwärmung, durchgeführt werden.

Es ist auch möglich, dass zum Verlöten der Metallbauteile eines der Metallbauteile um das andere Metallbauteil gefalzt wird. Das Falzen kann mittels eines Rollfalzverfahrens erfolgen, wodurch die Lotspuren, die vorher auf die Metallbauteile aufgebracht wurden, gut übereinander angeordnet werden können. Das Verlöten kann daraufhin durch Erwärmen, beispielsweise induktives Erwärmen, erfolgen. Bei der Herstellung von Falzstößen ist jedoch zu berücksichtigen, dass eine Lötspaltbreite d und eine Überlapplänge I_{ü} beachtet wird. Um geometrische Kerbwirkungseffekte bei erhöhter Spannungsübertragung zu vermeiden, müssen die Übergänge auf Materialstärken allmählich ausgeführt sein. Zusätzlich sind Knicke im Bauteil mit Radien zu versehen.

Optional kann die Fügestelle nach dem Verlöten versiegelt werden. Hiermit kann ein Korrosionsschutz bei der Lötverbindung hergestellt werden. Die Versiegelung kann durch geeignete Beschichtungsverfahren erfolgen.

Es ist beispielsweise möglich, die Fügestelle durch eine Grundierung und einen anschließenden Lackauftrag zu versiegeln. Dieses Verfahren zum Versiegeln der Fügestelle eignet sich besonders für eine Anwendung im Automobilbau.

Entsprechend einer besonders bevorzugten Ausführungsvariante der vorliegenden Erfindung wird das Metallbauteil mit einer beheizten Sonotrode mit Ultraschall beaufschlagt. Hierdurch kann ein frühzeitiges Erstarren des Lotes unter der Sonotrode verhindert werden.

Es hat sich besonders bewährt, wenn die Sonotrode etwa auf die Temperatur des Metallbauteils erwärmt wird. Hierdurch kann im Fertigungsprozess ein quasistationärer Zustand geschaffen werden, um optimale Fügeergebnisse zu erzielen.

In einem weiteren bevorzugten Beispiel der Erfindung wird das Lot gerade von vorn, direkt vor eine Sonotrode geführt und gefördert. Hiermit kann verhindert werden, dass der Anpressdruck des Lotes auf das Metallbauteil zu gering ist und somit der Wärmeeintrag nicht ausreicht, um den Lotwerkstoff zu schmelzen. Durch die gerade Führung direkt vor die Sonotrode wird stattdessen erreicht, dass der Lotwerkstoff direkt auf die Lötstelle gelangt und nicht während der Bewegung der Sonotrode seitlich von dem Metallbauteil weggeschoben wird.

Entsprechend einer anderen, ebenfalls vorteilhaften Variante der Erfindung wird das Lot über eine Bohrung in einem vorderen Bereich einer Sonotrode der Lötstelle zugeführt. Hierdurch erreicht man eine stabile Führung des Lotdrahtes direkt vor die Sonotrode auf die Lötstelle und verhindert ein Abknicken des Lotes. Somit kann die Qualität der ausgebildeten Lotspur erhöht werden.

Um die Kraterbildung in der Lotnaht bzw. Lotspur beim Zurückfahren der Sonotrode nach dem Lötvorgang zu vermeiden, wird nach einer weiteren Ausführungsform der vorliegenden Erfindung die Lötstelle nach dem Beloten nachbeheizt. Dies erfolgt vorzugsweise dadurch, dass ein Induktor nachheizt und mit einer zeitlichen Verzögerung in seine Ausgangsstellung gebracht wird. Das Nachheizen bewirkt eine Glättung der Lotspur, da der Lotwerkstoff besser verlaufen kann.

Erfindungsgemäß ist es ganz besonders von Vorteil, dass der Benetzungsvorgang und der Lötvorgang für das Fügen flussmittelfrei erfolgen kann. Die Wirkungen eines herkömmlich beim Löten eingesetzten Flussmittels, nämlich die chemisch reduzierende Wirkung zum Entfernen von Oxiden und die tensidische Wirkung zum Herabsetzen der Oberflächenspannung an der Lötstelle, können erfindungsgemäß allein durch den Einsatz von Ultraschall bereitgestellt werden. So können durch den Einsatz von Ultraschall an der Lötstelle befindliche Oxide mechanisch entfernt werden, und durch die Schwingbewegung der beim Löten eingesetzten Sonotrode kann schon bei geringen Ultraschallamplituden die Oberflächenspannung an der Lötstelle herabgesetzt werden. Während bei Verwendung von Flussmitteln typischerweise an der Lötstelle Flussmittelrückstände, wie störende chemisch aktive Substanzen, verbleiben, die nachfolgend durch Reinigung entfernt werden müssen, ist eine solche Reinigung erfindungsgemäß nicht erforderlich.

Sehr gute Eigenschaften der Fügeverbindung können erzielt werden, wenn zum Beloten ein bleifreies Weichlot auf Zinn- oder Zinkbasis verwendet wird. Derartige Legierungen besitzen gute Festigkeitseigenschaften, eine sehr gute Gefügeausbildung und ein günstiges Kriechverhalten. Zudem können durch die Verwendung bleifreier Lote Gesundheits- und Umweltbelastungen verringert werden. Lote auf Zinnbasis können insbesondere dann eingesetzt werden, wenn beim Löten niedrige Temperaturen, wie beispielsweise beim Verlöten von Aluminiumblechen, erforderlich sind. Dagegen empfiehlt es sich dann, wenn eine hohe Festigkeit der Lötverbindung gefragt ist, Lote auf Zinkbasis zu verwenden.

Die Aufgabe der Erfindung wird ferner durch eine Vorrichtung zum Beloten eines Metallbauteils, mit einer Auflage für das Metallbauteil, einer Lotdrahtzuführung, einer Ultraschalleinheit mit einer über dem Metallbauteil vorsehbaren Sonotrode, und einem Induktor zum Erwärmen einer Lötstelle auf dem Metallbauteil gelöst, wobei der Induktor in Form einer Leiterschleife ausgebildet ist, die um die Sonotrode herum angeordnet ist.

Mit Hilfe des Induktors kann das Metallbauteil in unmittelbarer Nähe der Sonotrode günstig erwärmt werden, um das darunter befindliche Lot aufzuschmelzen und während eines Ultraschalleintrags durch die Ultraschalleinheit zumindest auf Schmelztemperatur zu halten, wodurch eine sehr stabile Verbindung zwischen dem Lot und dem Metallbauteil an der Lötstelle hergestellt werden kann. Da sich die Feldlinien um einen Leiter herum ausbilden, ist davon auszugehen, dass eine Positionierung des Induktors um die Sonotrode herum zu einer gleichmäßigeren Temperaturverteilung im Metallbauteil führt. Somit kann eine besonders vorteilhafte Vor- und Nacherwärmung der Lötstelle zur Erhöhung der Prozessgeschwindigkeit erreicht werden.

Gemäß einer besonders bevorzugten Ausführungsvariante der Erfindung ist die Leiterschleife etwa rechteckig ausgebildet, wobei ein vor der Sonotrode angeordneter Bereich der Leiterschleife durch eine schmale Leiterschleife verlängert ist und seitlich der Sonotrode angeordnete Bereiche des Induktors erhöht ausgebildet sind. Durch das Vorsehen einer schmalen Leiterschleife in Bewegungsrichtung vorn am Induktor kann eine besonders günstige Vorerwärmung des Werkstücks beim bewegten Lötprozess ermöglicht werden. Durch die Erhöhung des Induktors seitlich der Sonotrode kann die Erwärmung der Randzonen des Metallbauteils herabgesetzt werden. Durch diese Geometrie kann gleichzeitig die Sonotrode angewärmt werden, damit diese das Lotbad nicht abschreckt. Somit kann erfindungsgemäß durch eine geeignete Geometrie des Induktors das induktive Wechselfeld so gestaltet werden, dass die zu fügenden Bauteile, die Sonotrode und das Lot im richtigen Maße erwärmt werden.

Es hat sich zudem bewährt, wenn die Lotdrahtzuführung ein Drahtvorschubgerät umfasst. Mit Hilfe des Drahtvorschubgerätes kann der Lotdraht direkt an die Lötstelle gefördert werden. Somit können reproduzierbare Ergebnisse bezüglich der Lotzufuhr erreicht werden.

Es ist besonders von Vorteil, wenn direkt vor der Sonotrode eine Führung für den Lotdraht vorgesehen ist. Somit kann der Lotdraht besonders günstig bis direkt an die Sonotrode herangeführt werden, wodurch ein Abknicken des Lotdrahtes weitgehend verhindert werden kann.

Entsprechend einer weiteren, ebenfalls vorteilhaften Weiterbildung der Erfindung ist in der Sonotrode eine Bohrung für die Lotzufuhr vorgesehen. Auch somit kann eine günstige Lotzufuhr bis an die Lötstelle erreicht werden, wobei zusätzlich die Gefahr eines Abknickens des Lotdrahtes weitgehend minimiert wird.

Es ist besonders empfehlenswert, wenn die Sonotrode beheizbar ist. Somit kann ein frühzeitiges Erkalten des Lotes an der Lötstelle direkt an der Sonotrode verhindert werden.

Um eine möglichst genaue Prozessführung bei induktiver Erwärmung zu realisieren, hat es sich als vorteilhaft erwiesen, wenn die Vorrichtung ein Pyrometer umfasst.

In einer weiteren Ausführungsform der vorliegenden Erfindung ist die Sonotrode in einem Schrägstellungswinkel zu dem Metallbauteil geneigt. Durch die Neigung kann ein gleichmäßiger Lotfilm zwischen dem Metallbauteil und der Sonotrode gewährleistet werden, da bei senkrechter Positionierung eine Verdrängung des Lotes durch die Sonotrode möglich ist.

Vorteilhafte Ausführungsformen der vorliegenden Erfindung werden im Folgenden anhand der Figuren der Zeichnungen näher erläutert, wobei
- Figur 1: schematisch einen möglichen Aufbau einer erfindungsgemäßen Vorrichtung zum Beloten von Metallbauteilen zeigt;
- Figur 2: eine Prinzipdarstellung einer in der vorliegenden Erfindung verwendeten Ultraschalllötanlage zeigt;
- Figur 3: schematisch eine Kavitationsblase im Moment der Implosion beim Ultraschalllöten zeigt;
- Figur 4: eine Variante einer Ausbildung eines Fügekopfes zur Anwendung in der erfindungsgemäßen Vorrichtung zum Beloten von Metallbauteilen zeigt;
- Figur 5: eine erste Induktorvariante zur Anwendung in der vorliegenden Erfindung zeigt;
- Figur 6: eine zweite Induktorvariante zur Anwendung in der vorliegenden Erfindung zeigt;
- Figur 7: eine dritte Induktorvariante zur Anwendung in der vorliegenden Erfindung zeigt;
- Figur 8: schematisch die Diffusion von Lot und Grundwerkstoff beim Löten zeigt;
- Figur 9: schematisch die Neigung einer Sonotrode zum Werkstück beim Beloten demonstriert;
- Figur 10: schematisch die grundsätzliche Anordnung zwischen zwei zu fügenden Metallbauteilen in Form eines Überlappstoßes zeigt; und
- Figur 11: schematisch die Anordnung zweier zu fügender Metallbauteile in Form eines Falzstoßes zeigt.

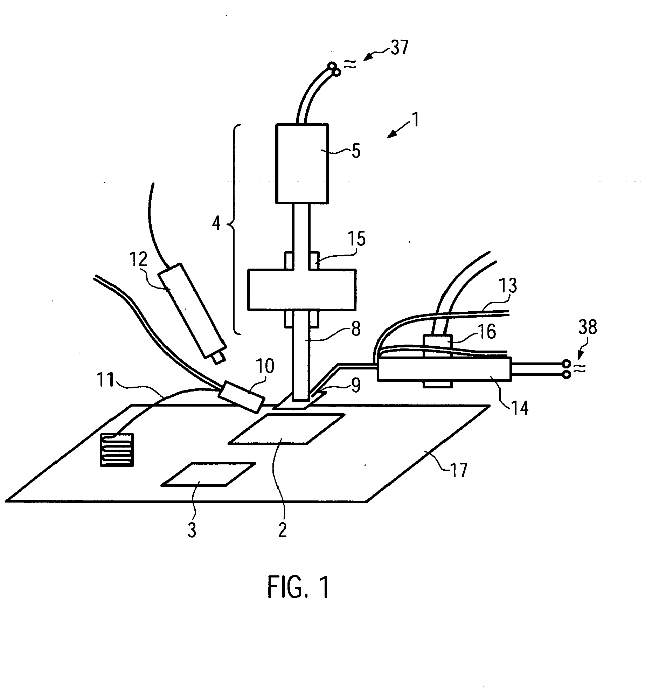

Figur 1 zeigt schematisch einen möglichen Aufbau einer erfindungsgemäßen Vorrichtung 1 zum Beloten von Metallbauteilen 2, 3. Die Vorrichtung 1 dient zur Ausführung des erfindungsgemäßen ultraschallunterstützten Lötverfahrens. Die in dem gezeigten Beispiel dargestellte Vorrichtung 1 wird verwendet, um Metallbauteile 2, 3 zu beloten. Sie kann jedoch auch verwendet werden, um Metallbauteile 2, 3 zu beloten und zu verlöten.

Die Vorrichtung 1 weist eine Ultraschalleinheit 4 mit einem Generator 5, einem Konverter 6, einem Booster 7 und einer Sonotrode 8 auf. Die Sonotrode 8 ist oberhalb eines zu belotenden Metallbauteils 2, 3 anordbar.

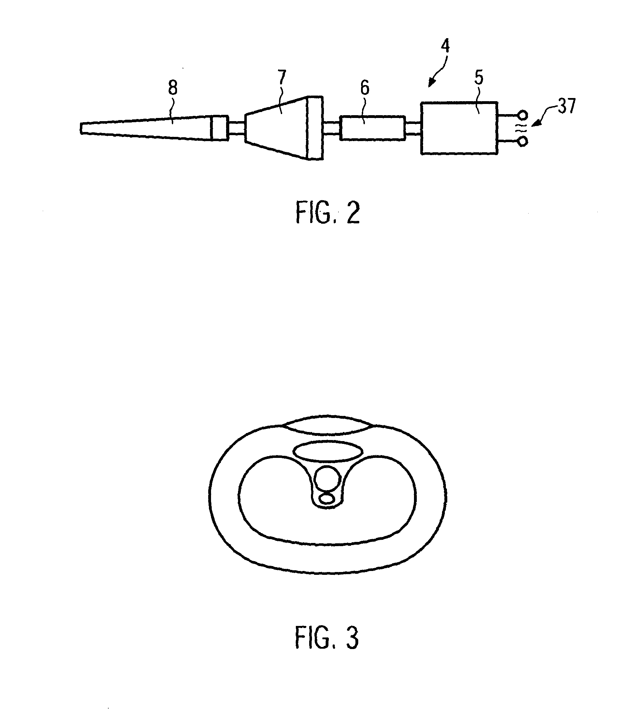

Figur 2 zeigt schematisch eine Prinzipdarstellung der in der Vorrichtung 1 verwendeten Ultraschalleinheit 4 mit dem Schallwandler 5, dem Konverter 6, dem Booster 7 und der Sonotrode 8. Als Ultraschall werden von dem Schallwandler 5 mechanische Schwingungen mit einer Frequenz ≥ 20 kHz ausgesendet. Versorgungsströme dieser Frequenz werden von einem Ultraschallgenerator 37, einem Elektrogenerator hoher Frequenz, erzeugt. Der Konverter 6 wandelt die Schwingungen in eine andere akustische Impedanz um. Der Booster 7 transformiert die vom Konverter 6 gelieferte Schwingung analog zu einem elektrischen Transformator und passt die Sonotrode akustisch an. Anschließend werden die mechanischen Schwingungen über die Sonotrode 8 in eine Lötstelle weitergeleitet.

Aufgrund der hohen Frequenz des Ultraschalls von ca. 20 kHz treten hohe Beschleunigungen im Lot auf, wodurch Kohäsion bzw. Adhäsion überwunden werden. Dabei entstehen kleine Vakuumbläschen, die sich vergrößern und gleich wieder implodieren, was als Kavitationseffekt in der Literatur beschrieben ist.

Figur 3 zeigt schematisch die Ausbildung einer Kavitationsblase im Moment der Implosion beim Ultraschalllöten.

Der Ultraschall, der über die Sonotrode 8 in das schmelzflüssige Lot 11 eingeleitet wird, erzeugt eine periodische Kompression und Dehnung, wodurch die Moleküle zusammengedrückt und gedehnt werden. Durch die Implosion der Vakuumbläschen entstehen hohe Drücke und Temperaturen. Dadurch werden Schockwellen und sehr kleine gerichtete Flüssigkeitsstrahlen ausgesendet. Diese wirken mit einer Geschwindigkeit bis zu 400 km/h auf ihre nähere Umgebung ein. Die Kavitationsbläschen sind hauptsächlich an den Grenzflächen des flüssigen Lotes 11 aktiv und sprengen Oxide oder Verunreinigungen von der Oberfläche 33 des Werkstücks 2, 3 ab.

Aufgrund dieser Wirkung des Ultraschalls ist es beim Ultraschalllöten nicht erforderlich, Flussmittel einzusetzen.

Die in dem in Figur 1 gezeigten Beispiel verwendete Sonotrode 8 zum Eintragen des Ultraschalls in die Lötstelle arbeitet mit einer Amplitude von 4 bis 12 µm und ist aus Molybdän gefertigt. Um die Sonotrode 8 vor zu starker Erwärmung, beispielsweise durch induktive Erwärmung, zu schützen, sind Bohrungen für Kühlluft vorhanden.

Der in Figur 1 gezeigte Vorrichtungsaufbau 1 weist ferner eine induktive Erwärmungsanlage zur Erwärmung der Lötstelle mit einem Hochfrequenzgenerator 38, einem als Impedanzwandler zwischengestalteten HF-Koaxialtransformator 14 und einem Induktor 9 auf. Zur Kühlung des Induktors 9 ist eine wassernetzunabhängige Kühlwasserrückkühlanlage 13 installiert. Die in dem in Figur 1 gezeigten Beispiel verwendete Induktionsanlage hat eine HF-Ausgangsleistung von 5 kW und einen Frequenzbereich von 150 kHz bis 350 kHz.

Die Vorrichtung 1 besitzt des Weiteren eine Lotdrahtvorschubeinrichtung 10. Der Lotdrahtvorschub 10 hat die Aufgabe, den Lotdraht 11 direkt an die Lötstelle zu fördern. Mit Hilfe des Lotdrahtsvorschubs 10 können reproduzierbare Ergebnisse bezüglich der Lotzufuhr erreicht werden. Dafür kann ein Gerät verwendet werden, mit dem Drähte von 1,5 mm gefördert werden können. Die Vorschubfunktion übernimmt in dem gezeigten Beispiel ein 4-Phasen-Schrittmotor, für den eine Schrittmotorensteuerung erforderlich ist. Die Steuerung wird durch einen Vorschubcontroller übernommen. Er steuert den Schrittmotor mit 400 Schritten pro Umdrehung an. Die Vorschubgeschwindigkeit des Lotdrahtes 11 bewegt sich in einem Arbeitsfenster von 2 mm/s bis 95 mm/s bei einer Teilung von 0,1 mm.

Die Vorrichtung 1 besitzt ferner ein Pyrometer 12. Mit dem Pyrometer 12 kann eine möglichst genaue Prozessführung bei induktiver Erwärmung realisiert werden, wobei berührungslos die Temperatur an der Lötstelle erfasst wird. Das in dem Beispiel von Figur 1 eingesetzte Pyrometer 12 misst linear in einer Ansprechzeit von 5 ms, in einem Bereich von 200 °C bis 700 °C, mit einer Genauigkeit von 1 % ± 1 °C und bei einer Reproduzierbarkeit von 3 ‰.

Da unterschiedliche Oberflächen 33 der zu fügenden Metallbauteile 2, 3 andere Abstrahlwerte aufweisen, die durch den Emissionskoeffizienten bestimmt sind, muss im Pyrometer 12 für jede Oberfläche 33 der Emissionskoeffizient eingestellt werden. Der Einstellbereich des Emissionskoeffizienten erstreckt sich zwischen 0,1 und 1, wobei der Maximalwert 1 für eine schwarze Oberfläche mit einer Wärmeaufnahme von 100 % steht. Zur Einstellung werden Proben schwarz lackiert und mit einer vordefinierten Heizleistung über einen festgelegten Zeitraum erhitzt. Mit dem auf 1 eingestellten Pyrometer 12 wird die Temperatur gemessen. Anschließend werden für den Versuch vorbereitete Metallbauteile 2, 3 unter den gleichen Bedingungen erhitzt und es wird ebenfalls die Temperatur gemessen. Dabei wird der Emissionskoeffizient am Pyrometer 12 so eingestellt, dass eine angezeigte Temperatur der der schwarzen Blechprobe entspricht. Um eine statistische Sicherheit zu erreichen, wird dieser Vorgang etwa zehnmal wiederholt.

Alternativ kann zur optischen Temperaturmessung mit dem Pyrometer 12 die Temperaturmessung mittels Thermoelement und Digitalthermometer durchgeführt werden.

Die Vorrichtung 1 nutzt für die Zuführung von Sonotrode 8 und Induktor 9 zu den zu fügenden Metallbauteilen 2, 3 zwei pneumatische Minischlitten 15, 16. Zusätzlich besteht die Möglichkeit, bei Bedarf die Sonotrode 8 mit einer Druckluftanlage zu kühlen. Die Erzeugung der benötigten Druckluft erfolgt mit einem Kompressor.

Bei der Vorrichtung 1 werden die Metallbauteile 2, 3 einer Auflage bzw. einem Arbeitstisch 17 aufgelegt, der sich durch eine elektrische Antriebseinheit über eine lineare Führung während des Lötvorgangs bewegt. Hierfür werden die Metallbauteile 2, 3 auf dem Arbeitstisch 17 befestigt. Die Antriebseinheit zum Bewegen des Arbeitstisches 17 ist an eine speicherprogrammierbare Steuerung (SPS) angeschlossen und somit voll mechanisiert.

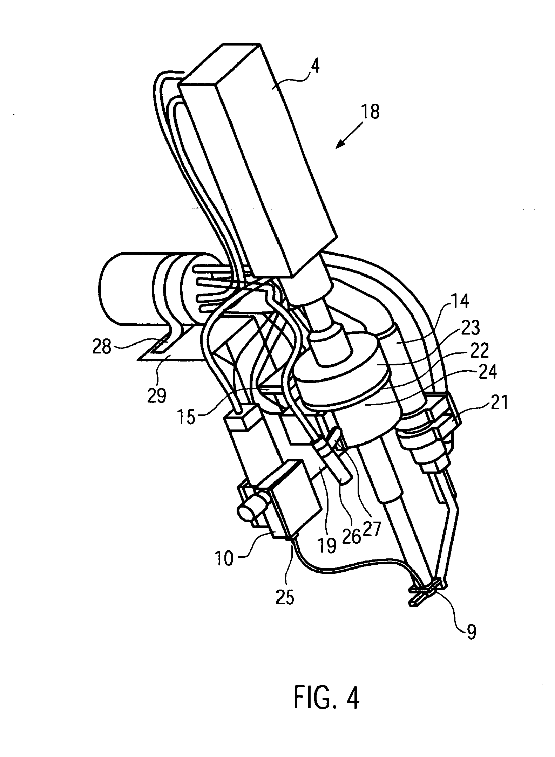

Figur 4 zeigt schematisch einen in der erfindungsgemäßen Vorrichtung 1 einsetzbaren Fügekopf 18.

Der Fügekopf 18 weist einen Grundträger 19 auf, der die Schnittstelle zwischen Roboter und Anbauteilen bildet und sich in dem gezeigten Bespiel aus drei Schweißteilen zusammensetzt. Ein erstes der drei Schweißteile ist ein Drehteil und besitzt flanschseitig einen Außendurchmesser von 125 mm und sechs Durchgangsbohrungen von 10 mm Durchmesser auf einem Lochkreis von 100 mm Durchmesser für die Befestigung am Roboterflansch. Dieser Flansch besitzt eine Mittenzentrierung und einen Justierbolzen für die Grundpositionierung am Roboter. Das Drehteil ist mit einer 10 mm starken Grundplatte verschweißt, auf die ein Minischlitten 15 und der Lotdrahtvorschub 10 aufgeschraubt werden. Dafür enthält die Grundplatte je vier Durchgangsbohrungen für Schrauben mit einem Gewinde M5 zur Anbringung des Minischlittens 15 und Schrauben mit einem Gewinde M6 für die Befestigung des Lotdrahtvorschubs 10.

Neben der Verschraubung erfolgt eine Zentrierung über Zentrierstifte. Sie haben die Aufgabe, die aus dem Gewicht der Ultraschalleinheit 4 resultierenden Kräfte aufzunehmen.

An die Grundplatte ist ein weiterer 5 mm starker Halter für den HF-Koaxialtransformator 14 geschweißt, in dem sich vier Innengewinde M6 für die Schrauben von Befestigungsschellen 21 befinden.

Der Induktor 9 wird aus dem HF-Koaxialtransformator 14 gespeist und wird über eine dafür vorgesehene Klemmverbindung angeflanscht. Das ermöglicht einen schnellen Austausch des Induktors 9 zu Wartungszwecken.

Roboter und Grundträger 19 werden mittels Schrauben M8 miteinander verbunden, die in ein passendes Innengewinde am Roboter verschraubt werden.

Zur Verbindung der Ultraschalleinheit 4 mit dem Minischlitten 15 wird ein speziell angefertigter Rundflansch 22 als Adapter verwendet. Dieser Flansch 22 wird dabei direkt mit einem schwingungsfreien Flansch 23 der Ultraschalleinheit 4 mittels dreier Schrauben M6 verbunden. Mit einer Schelle 24 wird der Rundflansch 22 zu dem Minischlitten 15 in Position gebracht.

Zur sicheren Führung des Lotdrahts 11 wird in dem gezeigten Beispiel ein 270 mm langer Teflonschlauch 25 eingesetzt, der vom Lotdrahtvorschub 10 bis in die Sonotrode 8 ragt.

Die in dem gezeigten Beispiel vorgesehene Temperaturmesseinrichtung weist einen Messkopf 26 auf, der mit einer Schelle 27, einem Stehbolzen und einer passenden Mutter verstellbar an der Befestigungsschelle 24 des schwingungsfreien Flansches 23 angeschraubt ist. Diese Verstellbarkeit ermöglicht eine Temperaturmessung an unterschiedlichen Temperaturmesspunkten.

Die Führung der Medienleitungen erfolgt über eine zentrale Befestigungsschelle 28. Dafür wurde zur Anbindung der Befestigungsschelle 28 ein spezieller Halter 29 mit einer Materialstärke von 2 mm entworfen. In dem Halter 29 befinden sich zwei Bohrungen, durch die er mittels zweier Schrauben des Grundträgers 19 befestigt wird. Die Weiterführung der Medienleitungen erfolgt über den Roboterarm, was in Figur 4 nicht gezeigt ist.

Das Gesamtgewicht des Fügekopfes 18 beträgt in dem gezeigten Beispiel inklusive aller Anbauteile ca. 25 kg.

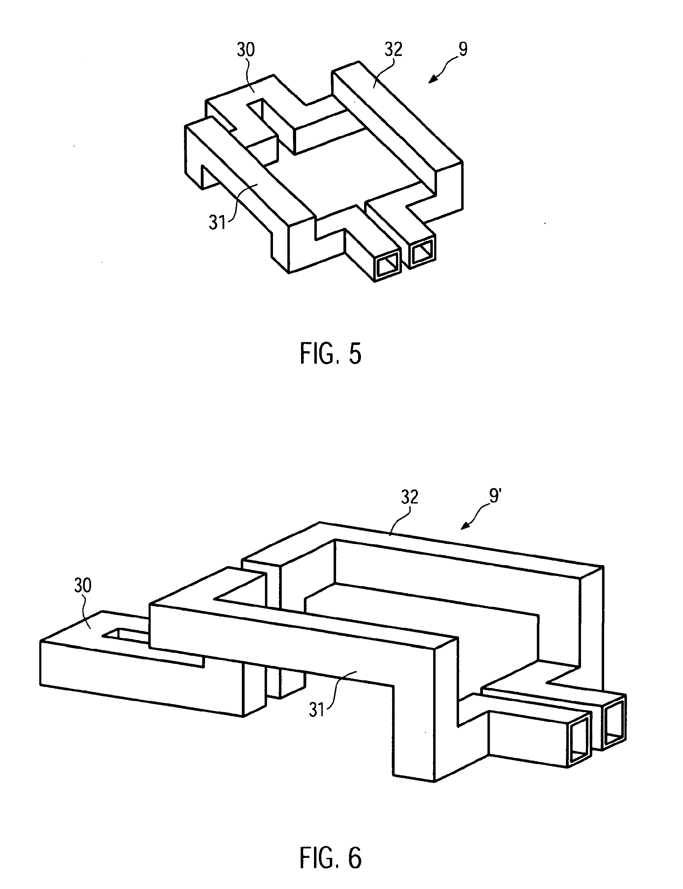

Figur 5 zeigt schematisch eine mögliche Induktorvariante für die Anwendung der erfindungsgemäßen Vorrichtung 1 bzw. dem Fügekopf 18.

Da sich bei einem Induktor Feldlinien um den Leiter herum ausbilden, ist der in Figur 5 dargestellte Induktor 9 so ausgebildet, dass er um die Sonotrode 8 herum positioniert werden kann, was zu einer gleichmäßigeren Temperaturverteilung in dem zu fügenden Metallbauteil 2, 3 führt. Der Induktor 9 besitzt zudem den Vorteil, dass er zu einer guten Vor- und Nacherwärmung der Lötstelle und damit zur Erhöhung der Prozessgeschwindigkeit beiträgt.

Der Induktor 9 ist im Wesentlichen als rechteckige Leiterschleife ausgebildet, wobei ein vor der Sonotrode 8 angeordneter Bereich der Leiterschleife durch eine schmale Leiterschleife 30 verlängert ist und seitlich der Sonotrode 8 angeordnete Bereiche 31, 32 des Induktors 9 erhöht ausgebildet sind. Mit dem Induktor 9 kann eine Lötstelle gleichmäßig erwärmt werden, ohne dabei die Randzonen übermäßig zu erhitzen. Die seitlich der Sonotrode 8 vorgesehene Erhöhung des Induktors 9 beträgt etwa 5 mm, um die Erwärmung der Randzonen des zu fügenden Metallbauteils 2, 3 herabzusetzen. Durch diese Geometrie wird gleichzeitig erreicht, dass die Sonotrode 8 angewärmt wird, damit diese das Lotbad nicht abschreckt.

Figur 6 zeigt schematisch eine weitere mögliche Ausführungsvariante eines bei der vorliegenden Erfindung verwendbaren Induktors 9'. Bei dem Induktor 9' ist im Vergleich zu dem in Figur 5 dargestellten Induktor 9 die Leiterschleife 30 im vorderen Bereich verlängert und die Seitenbereiche 31, 32 sind erhöht. Mit Veränderung der seitlichen Erhöhung des Induktors 9' lässt sich die Randzonenerwärmung beeinflussen. Somit kann durch den Induktor 9' eine noch bessere Erwärmung des zu fügenden Metallbauteils 2, 3 im Bereich der Lötstelle und eine geringere Erwärmung in der Randzone realisiert werden.

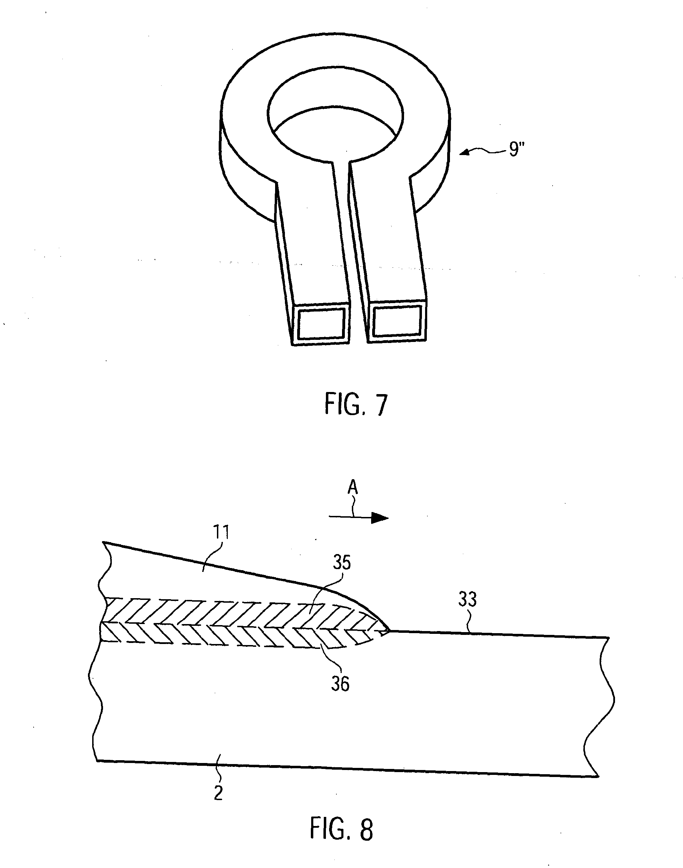

Figur 7 zeigt eine weitere mögliche Ausführungsform eines in der vorliegenden Erfindung verwendbaren Induktors 9". Die Induktorform des Induktors 9" entspricht einer idealen Leiterschleife, wodurch ein homogenes Temperaturfeld im Bereich des Kreisumfangs erzielt wird. Das bedeutet, dass eine gute Vor- bzw. Nacherwärmung der Lötstelle mit dem Induktor 9" erreicht wird. Es ist jedoch zu vermuten, dass bei Einsatz des Induktors 9" der Bereich der Sonotrode 8 voraussichtlich kaum erwärmt wird. Dies kann zu einem frühzeitigen Erstarren des Lotes unter der Sonotrode 8 führen.

Um im Fertigungsprozess einen quasistationären Zustand zu schaffen, ist es besonders von Vorteil, wenn die Sonotrode 8 auf die geforderte Werkstücktemperatur erwärmt wird. Dies kann unter anderem durch den Induktor 9, 9' oder 9" bzw. vorteilhaften Abwandlungen dieser Induktoren erreicht werden.

Figur 8 zeigt schematisch die Diffusion von Lot 11 und Grundwerkstoff 2 beim in der vorliegenden Erfindung verwendeten Ultraschalllöten. Der Pfeil A kennzeichnet die Fließrichtung des Lotes 11, das Bezugszeichen 35 die Diffusionszone im Lot 11 und das Bezugszeichen 36 die Diffusionszone in dem Metallbauteil 2.

Beim Löten kommt es zu einer Wechselwirkung zwischen dem festen Grundwerkstoff bzw. dem zu fügenden Metallbauteil 2 und dem schmelzflüssigen Lot 11, welche stoffschlüssig miteinander verbunden werden. Diese Bindung basiert auf dem Prinzip der Diffusion zwischen den Legierungselementen des zu fügenden Metallbauteils 2 und des Lotwerkstoffes 11, deren Folge Adhäsionskräfte sind. Dabei müssen die Atome des Lotwerkstoffes 11 und der Oberfläche 33 des Metallbauteils 2 in direktem Kontakt stehen, um zwischenatomare Bindungen zu bewirken. Deshalb müssen Oxidschichten und Verunreinigungen, wie Fette oder Öle, durch eine gründliche Reinigung vor dem Lötvorgang entfernt werden. Zusätzlich wirken auch Kohäsionskräfte zwischen den Molekülen eines Stoffes. Kohäsions- und Adhäsionskräfte sind gleichermaßen verantwortlich für die Festigkeit der Lötverbindung. Die Diffusionstiefe hat einen entscheidenden Einfluss auf die Festigkeit der Lötverbindung und beträgt in Abhängigkeit der zu fügenden Werkstoffe 2 µm bis einige Millimeter.

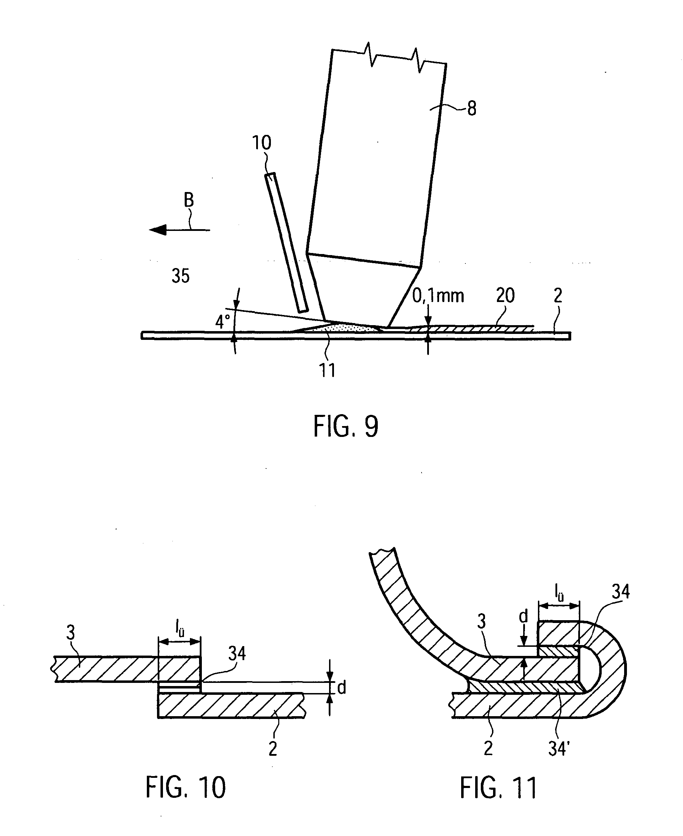

Figur 9 zeigt schematisch eine bei der vorliegenden Erfindung bevorzugte Neigung der Sonotrode 8 zu dem Werkstück bzw. zu fügenden Metallbauteil 2, wobei der Pfeil B die Bewegungsrichtung des Metallbauteils 2 angibt.

In dem in Figur 9 gezeigten Beispiel befindet sich die Sonotrode 8 in einem Abstand von 0,1 mm mit einem Schrägstellungswinkel von 4° zu dem Metallbauteil 2. Durch die Neigung wird ein gleichmäßiger Lotfilm 20 zwischen dem Metallbauteil 2 und der Sonotrode 8 erzeugt, da bei senkrechter Positionierung eine Verdrängung des Lotes 11 durch die Sonotrode 8 möglich ist. In dem in Figur 9 gezeigten Beispiel wird das Lot 11 gerade von vorn, direkt vor die Sonotrode 8 gefördert. Beim Beloten wird eine Lotzuführung 10 verwendet, die automatisch erfolgt.

In einer anderen, nicht gezeigten Ausführungsvariante der vorliegenden Erfindung kann in der Sonotrode 8 eine Bohrung für die Lotzufuhr vorgesehen sein. Auch hiermit kann eine geeignete Führung des Lotes 11 bis zur Lötstelle realisiert werden, ohne dass das Lot bzw. der Lotdraht 11 vorzeitig abknickt.

Figur 10 zeigt schematisch eine mögliche Anordnung zwischen zwei zu fügenden Metallbauteilen 2, 3 beim Verlöten in Form eines Überlappstoßes. Bei der Herstellung des Überlappstoßes müssen die beiden zu fügenden Stoßhälften der Bauteile 2, 3 vorher mit einer Belotungsnaht bzw. Lotspur 34 versehen werden. Nach der Fixierung der Bauteile 2, 3 in der gewünschten Endlage erfolgt das Verlöten durch induktive Erwärmung.

Figur 11 zeigt schematisch eine weitere mögliche Variante, mit welcher zu fügende Metallbauteile 2, 3 beim Verlöten angeordnet sein können. In Figur 11 überlappen die Metallbauteile 2, 3 einander in Form eines Falzstoßes. Beim Falzstoß sind ebenfalls die beiden Stoßhälften der Bauteile 2, 3 jeweils mit Lotspuren 34, 34' zumindest an den sich beim Falzen direkt gegenüber befindlichen Bereichen der Bauteile 2, 3 zu beloten. Anschließend erfolgt das Falzen beispielsweise mittels einer Rollfalzvorrichtung und das Verlöten durch induktive Erwärmung. Beim Falzen muss eine Lötspaltbreite d und eine Überlapplänge I_{ü} unbedingt beachtet werden. Wie in Figur 11 dargestellt, kann die Lotspur 34 länger als die Überlapplänge I_{ü} sein.

Um geometrische Kerbwirkungseffekte bei erhöhter Spannungsübertragung zu vermeiden, müssen die Übergänge auf unterschiedliche Materialstärken allmählich ausgeführt sein. Zusätzlich sind Knicke in den Bauteilen 2, 3 mit Radien zu versehen.

Im Folgenden wird die Vorgehensweise beim Ausführen des erfindungsgemäßen Fügeverfahrens näher erläutert.

Zunächst werden in einem ersten Schritt die zu fügenden Metallbauteile 2, 3 separat voneinander belotet. In dem Belotungsschritt werden die Metallbauteile 2, 3 jeweils an einem ebenen Oberflächenbereich induktiv erwärmt. Für die induktive Erwärmung wird vorzugsweise ein Induktor 9 verwendet, welcher, wie in Figur 4 gezeigt, um die Sonotrode 8 herum ausgebildet ist.

Die Temperatur des Oberflächenbereiches des erwärmten Metallbauteils 2, 3 wird durch den Induktor 9 an der Lötstelle so eingestellt, dass auf die Lötstelle auftreffendes Lot 11 beim Aufbringen auf die Lötstelle schmilzt. Hierfür wird der Lötstelle das Lot 11 allmählich durch die Lötdrahtvorschubeinrichtung 10 zugeführt.

Während des Aufbringens des Lotes 11 als auch nach dem Aufbringen des Lotes 11 wird die Lötstelle zumindest auf Schmelztemperatur des Lotes 11 gehalten. Parallel dazu wird die Lötstelle nach dem Schmelzen des Lotes 11 mit Ultraschall durch die Sonotrode 8 der Ultraschalleinheit 4 beaufschlagt. Hierbei geht das Lot 11, wie oben beschrieben, eine feste Verbindung mit der Oberfläche des Metallbauteils 2, 3 ein, auf welches es aufgebracht wurde. Es entsteht eine Lotspur oder Lotnaht 34 auf dem jeweiligen Metallbauteil 2, 3.

Nachfolgend werden die Metallbauteile 2, 3 in einem zweiten Schritt so zueinander angeordnet, dass sich ihre Lötstellen gegenüber sind. So können die Metallbauteile 2, 3 in Form eines Überlappstoßes, wie in Figur 10 gezeigt, oder auch in Form eines Falzstoßes, wie in Figur 11 gezeigt, angeordnet werden.

In der gewünschten Endlage werden die aneinandergebrachten Metallbauteile fixiert und daraufhin durch Erwärmen verlötet, um eine Fügestelle auszubilden.

Das Erwärmen erfolgt vorzugsweise zum Verlöten induktiv. Parallel dazu können die Metallbauteile 2, 3 beim Verlöten der erwärmten Metallbauteile mit Ultraschall beaufschlagt werden. Hierzu kann eine Vorrichtung verwendet werden, die ähnlich der Vorrichtung 1 ist, die in den Figuren 1 und 4 gezeigt ist. Insbesondere kann zum Verlöten ein Induktor 9 eingesetzt werden, der um die Sonotrode 8 der Ultraschalleinheit 4 herum angeordnet ist.

Bei dem erfindungsgemäßen Fügeverfahren für die Metallbauteile 2, 3 ist charakteristisch, dass das Beloten als auch das Verlöten der Metallbauteile 2, 3 im Wesentlichen punktuell erfolgt. Insbesondere erfolgt jeweils eine punktuelle Erwärmung des Bereiches unter dem Induktor 9. Auch wird bei der Ultraschall-Beaufschlagung nur die Stelle unter der Sonotrode 8 ultraschallbeaufschlagt.

Indem schon beim Beloten parallel zum Erwärmen des Lotes Ultraschall angewendet wird, ist bereits hier eine feste Verbindung zwischen Lot und Untergrund erzielt, so dass es beim Verlöten eine erhöhte Festigkeit zwischen den zu fügenden Metallbauteilen 2, 3 gibt. Hierdurch können qualitativ hochwertige Fügeergebnisse bei unterschiedlichsten Ausführungen von Metallbauteilen 2, 3 erzielt werden. Da trotz der punktuellen Arbeitsweise das Fügen kontinuierlich erfolgen kann, können die zu fügenden Metallbauteile 2, 3 in relativ kurzer Fügezeit miteinander verbunden werden.

## Patentansprüche

1. Fügeverfahren für Metallbauteile (2, 3),
wobei in einem ersten Schritt die zu fügenden Metallbauteile (2, 3) belotet werden, und
in einem zweiten Schritt die Metallbauteile (2, 3) an ihren Lötstellen aneinandergebracht, in einer gewünschten Endlage fixiert und durch Erwärmen verlötet werden, um eine Fügestelle zu erzeugen,
**dadurch gekennzeichnet,**
**dass** die Metallbauteile (2, 3) in dem ersten Schritt
jeweils an einem ebenen Oberflächenbereich induktiv erwärmt werden, dem erwärmten Oberflächenbereich an einer Lötstelle Lot (11) zugeführt wird, wobei die Temperatur an der Lötstelle so eingestellt wird, dass das Lot (11) beim Aufbringen auf die Lötstelle schmilzt, und
die Lötstelle nach dem Schmelzen des Lotes (11) wenigstens auf Schmelztemperatur gehalten und parallel dazu mit Ultraschall beaufschlagt wird, so dass jeweils eine Lotspur (34) auf den Metallbauteilen (2, 3) entsteht.

2. Fügeverfahren nach Anspruch 1, **dadurch gekennzeichnet, dass** die Metallbauteile (2, 3) zum Verlöten induktiv erwärmt werden.

3. Fügeverfahren nach Anspruch 1 oder 2, **dadurch gekennzeichnet, dass** die Metallbauteile (2, 3) beim Verlöten mit Ultraschall beaufschlagt werden.

4. Fügeverfahren nach einem der vorhergehenden Ansprüche, **dadurch gekennzeichnet, dass** das Lot (11) als Lötdraht der Lötstelle allmählich zugeführt wird und das Erwärmen und die Ultraschallbeaufschlagung der Lötstelle beim Beloten und/oder Verlöten im Wesentlichen punktuell erfolgt.

5. Fügeverfahren nach einem der vorhergehenden Ansprüche, **dadurch gekennzeichnet, dass** die Metallbauteile (2, 3) an den Lötstellen einander überlappend aufeinander angeordnet werden.

6. Fügeverfahren nach einem der vorhergehenden Ansprüche, **dadurch gekennzeichnet, dass** eines der Metallbauteile (2) um das andere Metallbauteil (3) gefalzt wird.

7. Fügeverfahren nach einem der vorhergehenden Ansprüche, **dadurch gekennzeichnet, dass** die Fügestelle nach dem Verlöten versiegelt wird.

8. Fügeverfahren nach Anspruch 7, **dadurch gekennzeichnet, dass** die Fügestelle durch eine Grundierung und einen anschließenden Lackauftrag versiegelt wird.

9. Fügeverfahren nach einem der vorhergehenden Ansprüche, **dadurch gekennzeichnet, dass** das Metallbauteil (2, 3) mit einer beheizten Sonotrode (8) mit Ultraschall beaufschlagt wird.

10. Fügeverfahren nach Anspruch 9, **dadurch gekennzeichnet, dass** die Sonotrode (8) etwa auf die Temperatur des Metallbauteils (2, 3) erwärmt wird.

11. Fügeverfahren nach einem der vorhergehenden Ansprüche, **dadurch gekennzeichnet, dass** das Lot (11) gerade von vorn, direkt vor eine Sonotrode (8) geführt und gefördert wird.

12. Fügeverfahren nach einem der Ansprüche 1 bis 10, **dadurch gekennzeichnet, dass** das Lot über eine Bohrung in einem vorderen Bereich einer Sonotrode der Lötstelle zugeführt wird.

13. Fügeverfahren nach einem der vorhergehenden Ansprüche, **dadurch gekennzeichnet, dass** die Lötstelle nach dem Beloten nachbeheizt wird.

14. Fügeverfahren nach einem der vorhergehenden Ansprüche, **dadurch gekennzeichnet, dass** der Benetzungsvorgang und der Lötvorgang für das Fügen flussmittelfrei erfolgt.

15. Fügeverfahren nach einem der vorhergehenden Ansprüche, **dadurch gekennzeichnet, dass** zum Beloten ein bleifreies Weichlot auf Zinn- oder Zinkbasis verwendet wird.

16. Vorrichtung (1) zum Beloten eines Metallbauteils (2, 3), mit einer Auflage (17) für das Metallbauteil (2, 3), einer Lotdrahtzuführung, einer Ultraschalleinheit (4) mit einer über dem Metallbauteil (2, 3) vorsehbaren Sonotrode (8), und einem Induktor (9) zum Erwärmen einer Lötstelle auf dem Metallbauteil (2, 3), wobei der Induktor (9) in Form einer Leiterschleife ausgebildet ist, die um die Sonotrode (8) herum angeordnet ist.

17. Vorrichtung nach Anspruch 16, **dadurch gekennzeichnet, dass** die Leiterschleife etwa rechteckig ausgebildet ist, wobei ein vor der Sonotrode (8) angeordneter Bereich der Leiterschleife durch eine schmale Leiterschleife (30) verlängert ist und seitlich der Sonotrode (8) angeordnete Bereiche (31, 32) des Induktors (9) erhöht ausgebildet sind.

18. Vorrichtung nach Anspruch 16 oder 17, **dadurch gekennzeichnet, dass** die Lotdrahtzuführung ein Drahtvorschubgerät (10) umfasst.

19. Vorrichtung nach einem der Ansprüche 16 bis 18, **dadurch gekennzeichnet, dass** direkt vor der Sonotrode (8) eine Führung für den Lotdraht (11) vorgesehen ist.

20. Vorrichtung nach einem der Ansprüche 16 bis 18, **dadurch gekennzeichnet, dass** in der Sonotrode (8) eine Bohrung für die Lotzufuhr vorgesehen ist.

21. Vorrichtung nach einem der Ansprüche 16 bis 20, **dadurch gekennzeichnet, dass** die Sonotrode (8) beheizbar ist.

22. Vorrichtung nach einem der Ansprüche 16 bis 21, **dadurch gekennzeichnet, dass** die Vorrichtung (1) ein Pyrometer (12) umfasst.

23. Vorrichtung nach einem der Ansprüche 16 bis 22, **dadurch gekennzeichnet, dass** die Sonotrode (8) in einem Schrägstellungswinkel zu dem Metallbauteil (2, 3) geneigt ist.
